# EUROPEAN PATENT APPLICATION

(11) **EP 4 803 784 A1**
(43) Date of publication of application: **09.09.2026**
(21) Application number: 26160842.6
(22) Date of filing: 26.02.2026
(51) Int. Cl.: F16J 15/02, F16J 15/10, H01M 50/183, H01M 50/20

(54) **GASKET AND SEALING STRUCTURE**

(30) Priority: 04.03.2025 JP 2025033656
(71) Applicant: NOK Corporation, Minato-ku Tokyo 105-8585 (JP)
(72) Inventor: ANDO, Yasunari, Kitaibaraki-shi, Ibaraki, 3191535 (JP); YOSHIDA, Yusuke, Kitaibaraki-shi, Ibaraki, 3191535 (JP)
(74) Representative: Global IP Europe Patentanwaltskanzlei

(57) **Abstract**

A gasket is configured to be sandwiched between a first sealing surface of a first member and a second sealing surface of a second member, the second sealing surface facing the first sealing surface. The gasket includes an annular elastic body in contact with the first sealing surface and the second sealing surface, the annular elastic body enclosing a space between the first member and the second member. The annular elastic body has a Shore A durometer hardness of 0 or more and 30 or less.

## Description

### CROSS REFERENCE TO RELATED APPLICATION

This Application is based on, and claims priority from, Japanese Patent Application No. 2025-033656, filed on March 4, 2025, the entire content of which is incorporated herein by reference.

### BACKGROUND

### Technical Field

The present disclosure relates to gaskets and sealing structures.

### Description of Related Art

A battery case for a vehicle such as an electric vehicle, which includes two members that together define a space for housing a battery, is known. Conventionally, a gasket is used to securely seal a gap between two opposing members of a battery case to improve sealing property. The gasket is mounted in a mounting groove provided in at least one of the two members, and is sandwiched between the two opposing members. For example, Japanese Patent Application Laid-Open Publication No. 2018-197582 discloses a structure in which a gasket is mounted in a mounting groove provided in a sealing surface.

In recent years, a variety of different resins have been used as a material for battery casings. Resin battery cases tend to be more susceptible than conventional metal cases to undulation and warping at their sealing surfaces. Consequently, a gap may develop between the gasket and one or more of the sealing surfaces. Further, in a configuration in which the gasket is sandwiched between the two members, one or both of the members may be subject to deformation as a result of a reaction force of the gasket acting on the two members between which the gasket is sandwiched. To avoid deformation of the gasket, it is necessary for the gasket to have a low reaction force. The above description is made with reference to a battery case. However, any sealing structure in which a gasket is sandwiched between two members may be subject to deformation as a result of exertion of a reaction force of the gasket.

### SUMMARY

An object of one aspect of the present disclosure is to both reduce a reaction force acting from a gasket on a sealing surface, and to increase a sealing property of the gasket.

To achieve the above object, a gasket according to an aspect of the present disclosure is configured to be sandwiched between a first sealing surface of a first member and a second sealing surface of a second member, the second sealing surface facing the first sealing surface. The gasket includes: an annular elastic body in contact with the first sealing surface and the second sealing surface, the annular elastic body enclosing a space between the first member and the second member, and the annular elastic body has a Shore A durometer hardness of 0 or more and 30 or less.

A sealing structure according to an aspect of the present disclosure includes a first member including a first sealing surface; a second member including a second sealing surface facing the first sealing surface; and a gasket configured to be sandwiched between the first sealing surface and the second sealing surface. The gasket includes an annular elastic body in contact with the first sealing surface and the second sealing surface, the annular elastic body enclosing a space between the first member and the second member, and the annular elastic body has a Shore A durometer hardness of 0 or more and 30 or less.

### BRIEF DESCRIPTION OF THE DRAWINGS

FIG. 1 is a cross-sectional view of a sealing structure according to a first embodiment.
FIG. 2 is an exploded perspective view of the sealing structure according to the first embodiment.
FIG. 3 is a schematic diagram illustrating changes when the gasket in the first embodiment is sandwiched between the first sealing surface and the second sealing surface.
FIG. 4 is a diagram showing a correlation between a Shore A durometer hardness and a tack force of the elastic body according to the first embodiment.
FIG. 5 is a cross-sectional and an enlarged view taken perpendicular to the circumferential direction of the gasket according to a second embodiment.
FIG. 6 is a schematic plan view of a sealing structure in which the gasket does not include a core wire.
FIG. 7 is a schematic plan view of the sealing structure according to the second embodiment.
FIG. 8 is a table comparing physical properties of core wires of different materials.
FIG. 9 is a schematic diagram illustrating changes when the gasket according to the second embodiment is sandwiched between the first sealing surface and the second sealing surface.
FIG. 10 is a schematic diagram illustrating changes when a gasket having a core wire partially exposed from an elastic body toward the first sealing surface, is sandwiched between the first sealing surface and the second sealing surface.
FIG. 11 is a schematic diagram of the vicinity of the gasket in a post-sandwiched state according to a second modification.
FIG. 12 is a cross-sectional view of a gasket according to a third modification.
FIG. 13 is a cross-sectional view of a gasket according to the third modification.
FIG. 14 is a cross-sectional view of a gasket according to the third modification.
FIG. 15 is an explanatory diagram of a method of forming a gasket from a single elongated member into an annular shape.

### DESCRIPTION OF THE EMBODIMENTS

Embodiments of the present disclosure will now be described with reference to the drawings. In the drawings, dimensions and scales of elements depicted may be different from those of actual products. The embodiments described below are one exemplary form envisioned when implementing the present disclosure and the scope of the present disclosure is not limited to the following embodiments.

### A: First Embodiment

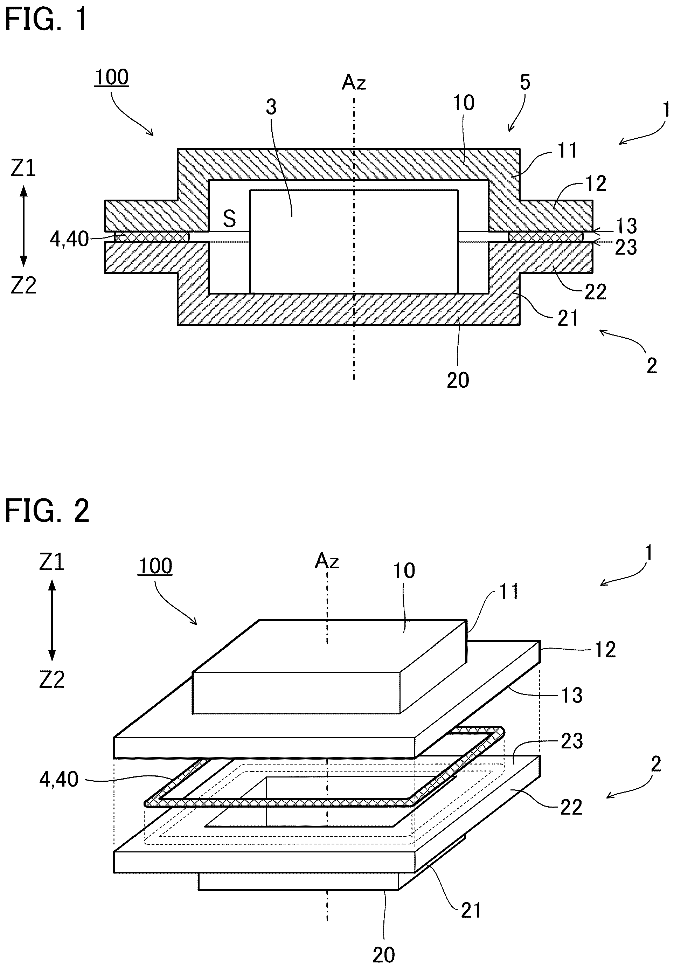

FIG. 1 is a cross-sectional view of a sealing structure 100 according to a first embodiment. FIG. 2 is an exploded perspective view of the sealing structure 100. As illustrated in FIGS. 1 and 2, the sealing structure 100 according to the first embodiment includes a first member 1, a second member 2, a battery 3, and a gasket 4. In FIG. 2, illustration of the battery 3 is omitted for convenience. The battery 3 may be interpreted as an external element of the sealing structure 100.

In the following description, referring to FIG. 1, the vertical direction is the direction along the Z-axis. The Z-axis is denoted as having a Z1 direction and an opposing Z2 direction. The Z1 direction is a direction toward the first member 1 and away from the second member 2. That is, the first member 1 is located in the Z1 direction away from the second member 2. An object viewed from a point on the Z-axis is referred to as being in "plan view."

As illustrated in FIG. 1 and in FIG. 2, an axial line Az is assumed. In plan view, the axial line Az is an imaginary straight line that passes through the center of the first member 1 and the center of the second member 2.

The first member 1 and the second member 2 are formed of a resin material. Examples of the resin material used for the first member 1 and the second member 2 include polycarbonate (PC), acryl resin (PMMA), polyamide (PA), polyethylene terephthalate (PET), polyphenylene sulfide (PPS), polypropylene (PP), and polystyrene (PS). The first member 1 and the second member 2 may each be formed of a different type of resin material, or may each be formed of a same type of resin material.

As illustrated in FIG. 1, the first member 1 and the second member 2 are secured to each other by use of a fastening member (not shown), such as a bolt, to provide a hollow housing 5. The housing 5 according to the first embodiment is a battery case in which the battery 3 is accommodated in a space S between the first member 1 and the second member 2. For example, the first member 1 and the second member 2 may each be box-shaped members configured to accommodate the battery 3. A gasket 4 is configured to be sandwiched between the first member 1 and the second member 2. The gasket 4 is an annular sealing device that seals the space S between the first member 1 and the second member 2.

As illustrated in FIG. 1 and FIG. 2, the first member 1 includes a lid 10, a first side wall 11, and a first flange 12. The lid 10 is a rectangular plate. The first side wall 11 is provided along the periphery of the lid 10 as a rectangular frame, and protrudes in the Z2 direction from the periphery of the lid 10. The first side wall 11 extends along the axial line Az. At an end of the first side wall 11 facing in the Z2 direction, the first flange 12 is provided and extends along the entire periphery of the first side wall 11. The first flange 12 extends outward from an outer periphery of the first side wall 11 in the Z2 direction. Thus, the first side wall 11 connects the lid 10 and the first flange 12.

The first member 1 includes a first sealing surface 13. The first sealing surface 13 is a flat surface perpendicular to the axial line Az and faces in the Z2 direction. In plan view, the first sealing surface 13 is a rectangular frame that extends around the periphery of the space S. Specifically, the first sealing surface 13 includes a surface of the first flange 12 that faces in the Z2 direction and an end surface of the first side wall 11 that faces in the Z2 direction. The axial line Az is also defined as an axial line perpendicular to the first sealing surface 13.

The second member 2 includes a bottom 20, a second side wall 21, and a second flange 22. The bottom 20 is a rectangular plate. The second side wall 21 is a rectangular frame that extends along the entire periphery of the bottom 20. The second side wall 21 protrudes from the periphery of the bottom 20 in the Z1 direction. The second side wall 21 extends along the axial line Az. Thus, the space S between the first member 1 and the second member 2 is enclosed by the lid 10, the first side wall 11, the bottom 20, and the second side wall 21. At an end of the second side wall 21 facing in the Z1 direction, a second flange 22 is provided along the entire periphery of the second side wall 21. The second flange 22 extends outward from the outer periphery of the second side wall 21 at the end facing in the Z1 direction. Thus, the second side wall 21 connects the bottom 20 and the second flange 22.

The second member 2 includes a second sealing surface 23. The second sealing surface 23 is a flat surface perpendicular to the axial line Az and faces in the Z1 direction. In plan view, the second sealing surface 23 is a rectangular frame that extends along the entire periphery of the space S. Specifically, the second sealing surface 23 includes a surface of the second flange 22 that faces in the Z1 direction and an end surface of the second side wall 21 that faces in the Z1 direction. The first sealing surface 13 of the first member 1 and the second sealing surface 23 of the second member 2 face each other along the axial line Az. Specifically, the first sealing surface 13 and the second sealing surface 23 face each other with a predetermined distance therebetween.

In the first embodiment, the first sealing surface 13 and the second sealing surface 23 are each flat surfaces, neither of which is configured to include a mounting groove for mounting the gasket 4. That is, neither the first sealing surface 13 nor the second sealing surface 23 is configured to include a recess (mounting groove) extending along the gasket 4 to accommodate the gasket 4. In a configuration in which a mounting groove is formed in each of the first sealing surface 13 and the second sealing surface 23, it is necessary to secure a size (for example, a plate thickness or a lateral width) for each of the first flange 12 and the second flange 22 to ensure sufficient strength. Thus, according to the first embodiment, a size of each of the first flange 12 and the second flange 22 can be reduced as compared with a configuration in which a mounting groove is formed in each of the first sealing surface 13 and the second sealing surface 23.

The gasket 4 is disposed between the first sealing surface 13 and the second sealing surface 23. The gasket 4 of the first embodiment comprises an elastic body 40.

As illustrated in FIG. 2, in plan view the elastic body 40 is annular. The axial line Az may also be referred to as a central axis of the elastic body 40. In plan view, the term "annular" is a shape obtained by removing from within a first closed region a second closed region (i.e., a loop shape). A "closed region" is, for example, a region enclosed by one or both of a curved segment and a line segment. That is, "annular" is a closed loop shape that encloses a space and overall is constituted of straight segments and curved segments.

The elastic body 40 is made of urethane. The urethane is formed by mixing a polyol with an isocyanate. Polypropylene glycol (PPG) is mainly used as the polyol. When a polyol is added in an amount equal to or greater than the weight of the isocyanate, the resulting urethane exhibits tackiness. To form the gasket 4 according to the first embodiment, a molding technique, such as extrusion molding, sheet molding, or casting molding, is used.

The elastic body 40 has a Shore A durometer hardness of 0 or more and 30 or less. More preferably, the elastic body 40 has a Shore A durometer hardness of 5 or more and 15 or less. That is, the elastic body 40 is sufficiently soft.

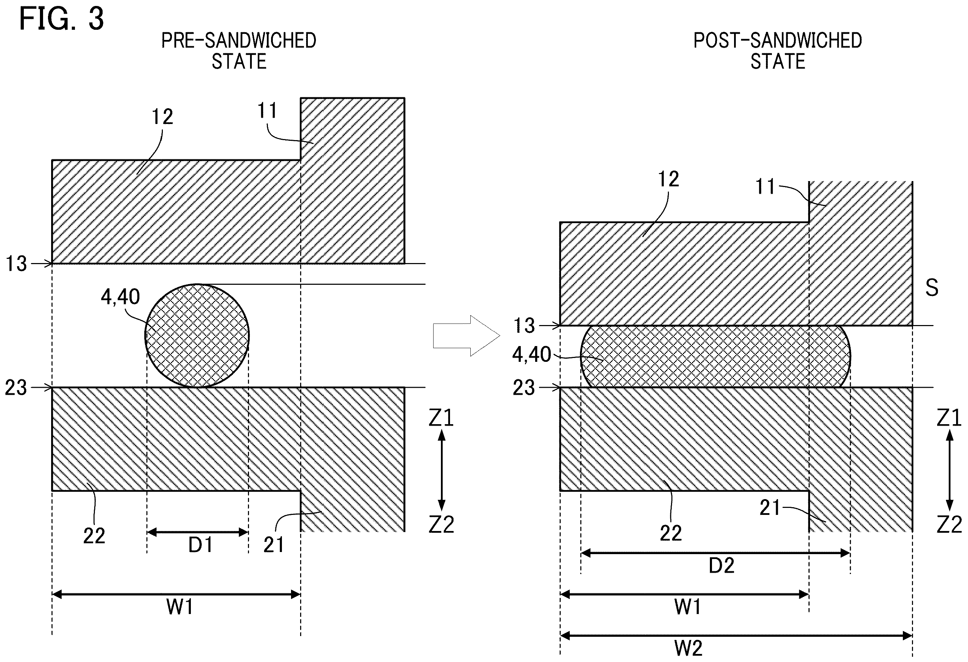

FIG. 3 is a schematic diagram illustrating changes when the gasket 4 according to the first embodiment is sandwiched between the first sealing surface 13 and the second sealing surface 23. As illustrated in FIG. 3, in cross section a shape of the elastic body 40 taken perpendicular to its circumferential direction before the elastic body 40 is sandwiched between the first sealing surface 13 and the second sealing surface 23, is circular (hereinafter "pre-sandwiched state"). The wire diameter D1 of the elastic body 40 in its pre-sandwiched state is smaller than the width W1 of each of the first flange 12 and the second flange 22. In plan view, the elastic body 40 in its pre-sandwiched state overlaps the first flange 12 and the second flange 22, and extends outward of the first side wall 11 and the second side wall 21. The wire diameter D1 of the elastic body 40 is a difference between the outer diameter and the inner diameter of the elastic body 40.

The elastic body 40 is compressed in the direction of the axial line Az by pressure acting on the elastic body 40 from the first sealing surface 13 and the second sealing surface 23. That is, pressure acting on the elastic body 40 from the first sealing surface 13 and the second sealing surface 23 is absorbed by deformation of the elastic body 40. Since the elastic body 40 according to the first embodiment is sufficiently soft, the elastic body 40 readily deforms under the pressure acting on it from the first sealing surface 13 and the second sealing surface 23. Thus, a reaction force exerted by the compressed elastic body 40 on the first sealing surface 13 and the second sealing surface 23 is reduced as compared with a configuration in which the elastic body 40 has a Shore A durometer hardness that exceeds 30.

When the gasket 4 is sandwiched between the first sealing surface 13 and the second sealing surface 23 (hereinafter "post-sandwiched state"), in plan view, the outer periphery of the elastic body 40 is inward of each of the outer periphery of the first sealing surface 13 and the second sealing surface 23. Further, in plan view, the inner periphery of the elastic body 40 in the post-sandwiched state is outward of each of the inner periphery of the first sealing surface 13 and the second sealing surface 23. A wire diameter D2 of the elastic body 40 in the post-sandwiched state is larger than the width W1 of each of the first flange 12 and the second flange 22. The wire diameter D2 is smaller than the width W2 from the outer periphery to the inner periphery of each of the first sealing surface 13 and the second sealing surface 23. That is, in plan view, the elastic body 40 in the post-sandwiched state overlaps not only the first sealing surface 13 and the second sealing surface 23 but also the first side wall 11 and the second side wall 21.

As described above, each of the first member 1 and the second member 2 is made of a resin material. Use of a resin material is advantageous from a viewpoint of, for example, weight reduction and ease of manufacture, as compared to use of a metal material for the first member 1 and the second member 2. However, use of a resin material as opposed to use of a metal material for the first member 1 and the second member 2 causes the first member 1 and the second member 2 to be susceptible to undulation and to warping at their sealing surfaces.

As illustrated in FIG. 3, the elastic body 40 is compressed in the direction of the axial line Az by pressure acting on the elastic body 40 from the first sealing surface 13 and the second sealing surface 23. When the gasket 4 has a composition that is relatively hard, the elastic body 40 does not readily conform to a shape of each of the first sealing surface 13 and the second sealing surface 23 when the elastic body 40 is sandwiched between the first sealing surface 13 and the second sealing surface 23. Consequently, the gasket is prone to deformation, and a gap is likely to occur between the gasket 4 and a deformed portion of one or both of the first sealing surface 13 and the second sealing surface 23, such as a portion exhibiting undulation or warping. In contrast, since the elastic body 40 according to the first embodiment is sufficiently soft, when the elastic body 40 is sandwiched between the first sealing surface 13 and the second sealing surface 23, the portion of the elastic body 40 that contacts the first sealing surface 13 readily deforms to conform to the shape of the first sealing surface 13. Likewise, the portion of the elastic body 40 that contacts the second sealing surface 23 readily deforms to conform to the shape of the second sealing surface 23.

Thus, because the respective members 1 and 2 are made of a resin material, the gasket 4 according to the first embodiment can minimize the likelihood of gaps occurring between the gasket 4 and either of the first sealing surface 13 or the second sealing surface 23, even when deformation occurs in either one of the members. As described above, according to the configuration in which each of the first member 1 and the second member 2 is made of a resin material, a weight of the sealing structure 100 can be reduced and manufacture simplified, while improving sealing performance.

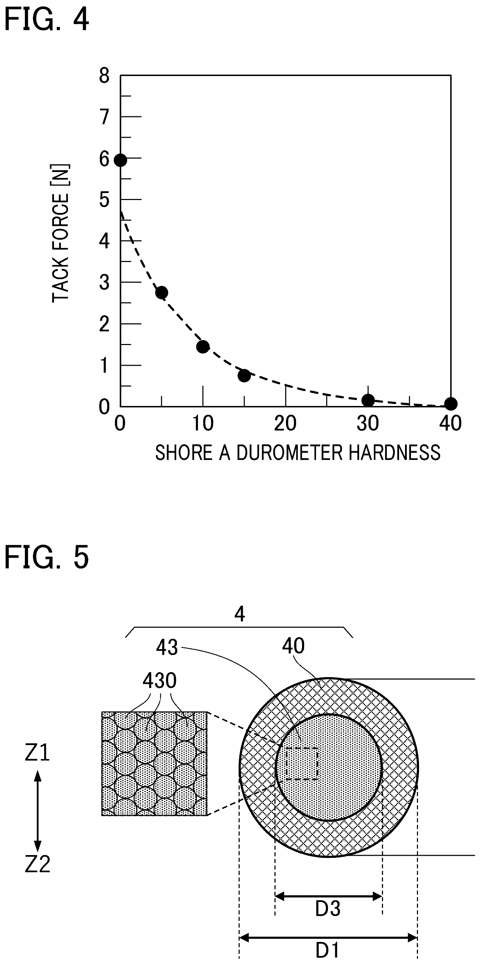

As described above, urethane, which is the material of the elastic body 40, exhibits tackiness with addition of polyol in an amount equal to or greater than the weight of the isocyanate. FIG. 4 is a diagram showing a correlation between a Shore A durometer hardness and a tack force of the elastic body 40 according to the first embodiment. As illustrated in FIG. 4, as the Shore A durometer hardness of the elastic body 40 decreases, the tack force increases. Therefore, when the elastic body 40 has a Shore A durometer hardness of 0 or more and 30 or less (as stipulated in the first embodiment), the elastic body 40 exhibits tackiness.

Accordingly, when the elastic body 40 is in a post-sandwiched state between the first sealing surface 13 and the second sealing surface 23, the elastic body 40 sticks to the first sealing surface 13 and the second sealing surface 23. Therefore, regardless of a direction of displacement of either the first sealing surface 13 or the second sealing surface 23, the elastic body 40 deforms and conforms to the displacement. Since the elastic body 40 deforms and conforms to the first sealing surface 13 and the second sealing surface 23, there is little likelihood of the elastic body 40 peeling from either of the first sealing surface 13 or the second sealing surface 23. Consequently, a gap is less likely to occur between the elastic body 40 and either of the first sealing surface 13 or the second sealing surface 23.

As described above, when the elastic body 40 has a Shore A durometer hardness of 0 or more and 30 or less, the elastic body 40 remains in sufficiently secure contact with the first member 1 and the second member 2. As described above, in a further advantageous configuration, the elastic body 40 has a Shore A durometer hardness of 5 or more and 15 or less.

When the elastic body 40 has a Shore A durometer hardness of 5 or more, a hardness level is maintained at a sufficient level to retain the shape of the gasket 4. That is, deformation of the gasket 4 of the sealing structure 100 is prevented or minimized. Accordingly, the gasket 4 exhibits ease of handling as compared to when the elastic body 40 has a Shore A durometer hardness of 0 or more and less than 5.

As described above, from a viewpoint of retaining a stable shape of the gasket 4, it is advantageous for the elastic body 40 to have a Shore A durometer hardness of 5 or more. On the other hand, when the elastic body 40 has a Shore A durometer hardness of 15 or less, a reduction in a reaction force acting from the gasket 4 on the first sealing surface 13 and the second sealing surface 23, and consequent improvement in sealing properties is particularly remarkable, compared to when the elastic body 40 has a Shore A durometer hardness exceeding 15.

As described above, when the elastic body 40 has a Shore A durometer hardness of 0 or more and 30 or less, and more advantageously, when the elastic body 40 has a Shore A durometer hardness of 5 or more and 15 or less, since the elastic body 40 is in sufficiently secure contact with the first sealing surface 13 and the second sealing surface 23, the space S between the first member 1 and the second member 2 can be effectively sealed. That is, suppression of the reaction force from the gasket 4 on the first sealing surface 13 and the second sealing surface 23 can be achieved, while improving the sealing performance by the gasket 4.

### B: Second Embodiment

A second embodiment of the present disclosure will now be described. In each of the aspects illustrated below, elements whose functions are the same as those of the first embodiment will be denoted using like reference numerals as those of the first embodiment, and detailed descriptions thereof will be omitted as appropriate.

FIG. 5 is a cross-sectional enlarged view taken perpendicular to the circumferential direction of the gasket 4 according to a second embodiment. As illustrated in FIG. 5, the gasket 4 according to the second embodiment includes a core wire 43 in addition to the elastic body 40. For manufacture of the gasket 4 according to the second embodiment, a molding technique such as extrusion molding or casting molding may be used.

The stiffness of the core wire 43 is greater than that of the elastic body 40. Consequently, the core wire 43 is less susceptible to deformation than the elastic body 40.

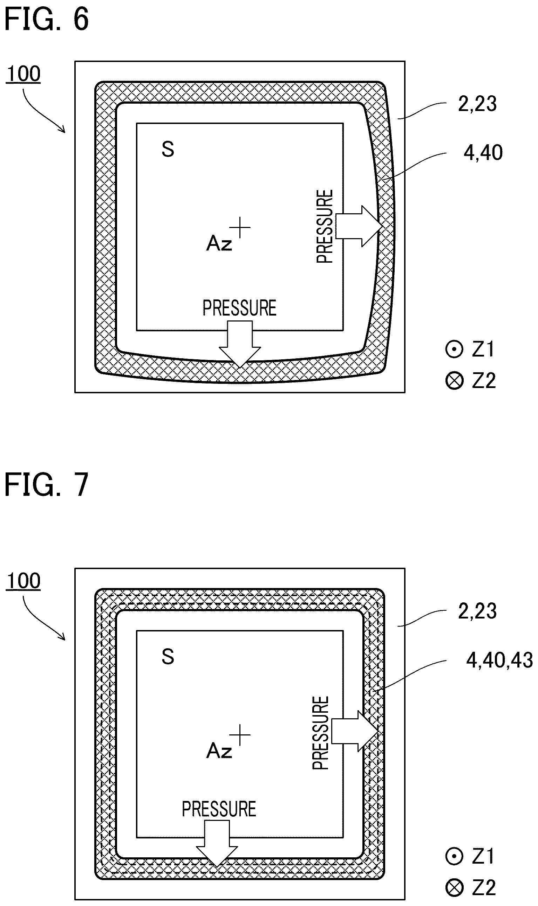

FIG. 6 is a schematic plan view of the sealing structure 100 with a configuration in which the gasket 4 does not include the core wire 43. FIG. 7 is a schematic plan view of the sealing structure 100 according to the second embodiment. FIG. 6 and FIG. 7 each show a configuration in which the battery 3 and the first member 1 are omitted from the sealing structure 100. As shown in each of FIG. 6 and FIG. 7, when air in the space S expands due to heat generated by the battery 3 in the post-sandwiched state, pressure from inside the housing 5 transfers to outside of the housing 5 and acts on the gasket 4. As shown in FIG. 6, in a configuration in which the gasket 4 does not include the core wire 43, the gasket 4 is susceptible to deformation when the pressure transferred from inside to outside of the housing 5 acts on the gasket 4. Consequently, there is a possibility that a sealing performance of the gasket 4 may be compromised.

On the other hand, as shown in FIG. 7, the gasket 4 according to the second embodiment includes the core wire 43, and thus has a greater stiffness than the elastic body 40. Therefore, even if pressure transfers from inside to outside of the housing 5 and acts on the gasket 4, the gasket 4 is less likely to be subject to deformation. That is, the core wire 43 reinforces the mechanical strength of the gasket 4.

The core wire 43 is made of a resin material. Specifically, as illustrated in FIG. 5, the material of the core wire 43 is a resin fiber 430 such as aramid fiber or nylon fiber. The core wire 43 is composed of a plurality of strands of fibers 430. Since the elastic body 40 enters gaps between the fibers 430 in the core wire 43, a contact area between the core wire 43 and the elastic body 40 is large, as compared with a configuration in which the core wire 43 is composed of a single fiber 430. Therefore, in a state in which the gasket 4 is sandwiched between the first sealing surface 13 and the second sealing surface 23, there is little likelihood of peeling of the core wire 43 and the elastic body 40.

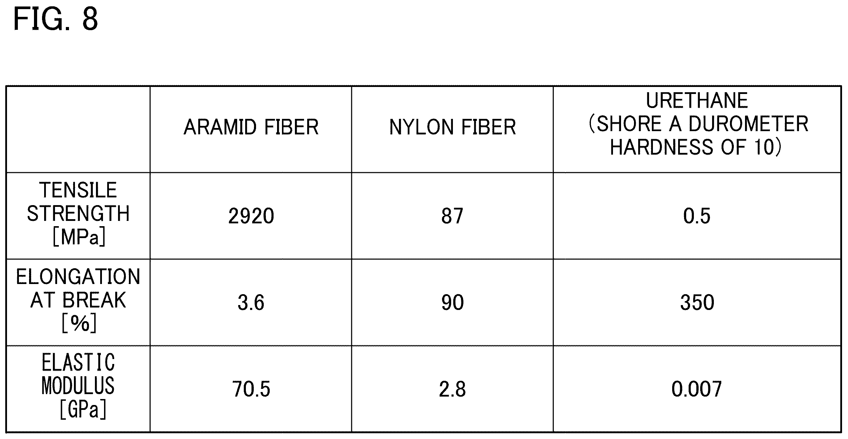

FIG. 8 is a table comparing physical properties of core wires 43 made of different materials. In FIG. 8, tensile strength, elongation at break, and elastic modulus are illustrated for a plurality of types of core wires 43 made of different materials. The higher the numerical values of the tensile strength and the elastic modulus, the greater the stiffness of the core wire 43; and the smaller the numerical values of the elongation at break, the greater the stiffness of the core wire 43. As described above, the material of the core wire 43 is either aramid fiber or nylon fiber. For comparison, the physical properties including tackiness of urethane having a Shore A durometer hardness of 10 were measured in the same manner. That is, the values representing physical properties of the urethane correspond to the values representing the physical properties of the gasket 4 composed only of the elastic body 40 (that is, the elastic body 40 according to the first embodiment).

As illustrated in FIG. 8, the core wire 43 made of aramid fiber has the highest tensile strength, and urethane has the lowest tensile strength. The elongation at break of urethane is the highest, and the elongation at break of the core wire 43 made of aramid fiber is the lowest. The elastic modulus of the core wire 43 made of aramid fiber is the highest, and that of urethane is the lowest. These results showed that the stiffness of the core wire 43 according to the second embodiment is greater than the stiffness of the elastic body 40.

As illustrated in FIG. 5, in cross section taken perpendicular to the circumferential direction of the gasket 4 the shape of the core wire 43 is circular. In a cross section taken perpendicular to the circumferential direction of the gasket 4, the center of the core wire 43 coincides with the center of the elastic body 40. The wire diameter D3 of the core wire 43 in the cross section taken perpendicular to the circumferential direction of the gasket 4 is smaller than the wire diameter D1 of the elastic body 40 in the pre-sandwiched state. In other words, the core wire 43 is embedded in the elastic body 40. Specifically, the core wire 43 is covered by the elastic body 40 along its entire circumference. According to the above-described configuration, the contact area between the core wire 43 and the elastic body 40 is larger than that in the configuration in which a part of the core wire 43 is exposed beyond the elastic body 40. Therefore, when the gasket 4 is sandwiched between the first sealing surface 13 and the second sealing surface 23, there is little likelihood that the elastic body 40 and the core wire 43 will peel.

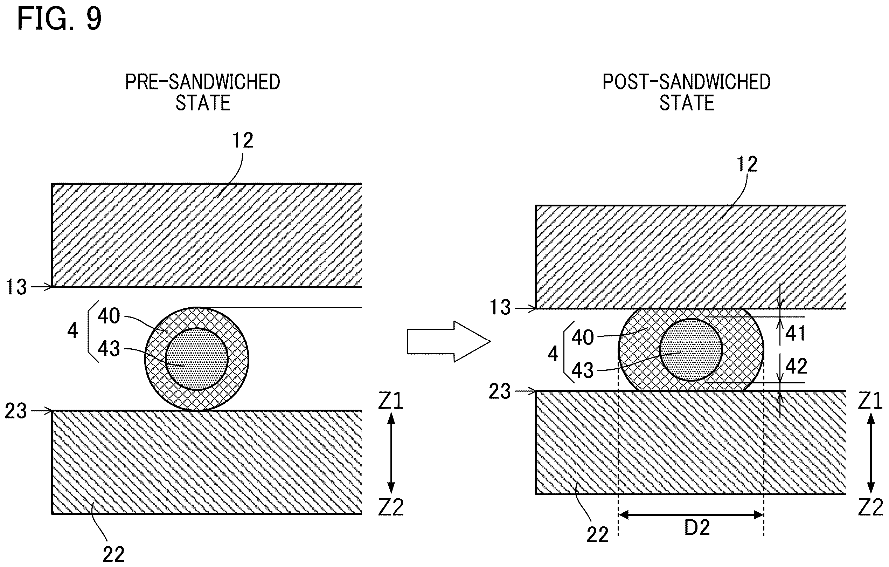

FIG. 9 is a schematic diagram illustrating changes when the gasket 4 according to the second embodiment is sandwiched between the first sealing surface 13 and the second sealing surface 23. As illustrated in FIG. 9, in the post-sandwiched state, the core wire 43 is positioned between a first portion 41 of the elastic body 40 that is in contact with the first sealing surface 13 and a second portion 42 of the elastic body 40 that is in contact with the second sealing surface 23. The first portion 41 is a surface-layer side portion of the elastic body 40 that is in contact with the first sealing surface 13. The second portion 42 is a surface-layer side portion of the elastic body 40 that is in contact with the second sealing surface 23.

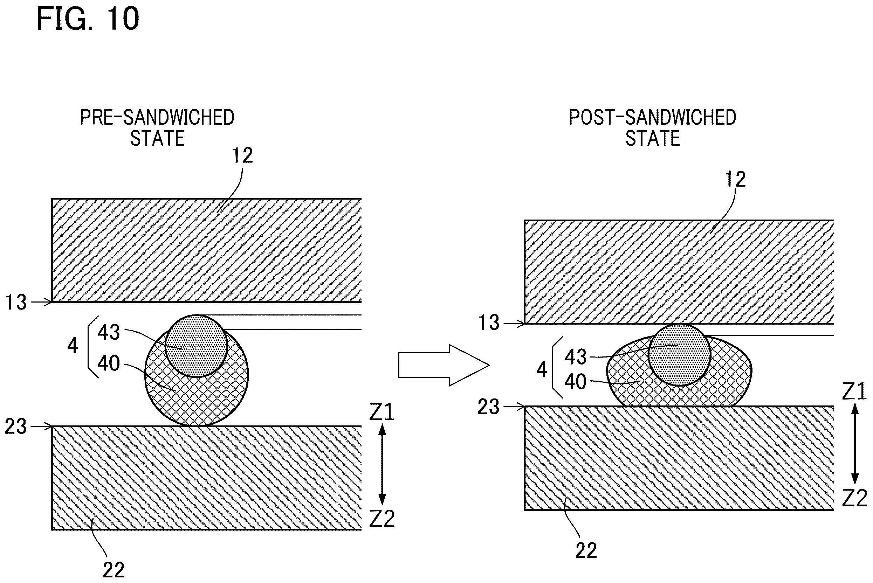

FIG. 10 is a schematic diagram illustrating changes when the gasket 4, which has core wire 43 partially exposed beyond the elastic body 40 toward the first sealing surface 13, is sandwiched between the first sealing surface 13 and the second sealing surface 23. As illustrated in FIG. 10, in a configuration in which only the core wire 43 is in contact with the first sealing surface 13, the core wire 43 does not readily conform to the shape of the first sealing surface 13, with which the core wire 43 is in contact, and thus there is a possibility that the sealing properties of the gasket 4 may be compromised. On the other hand, as illustrated in FIG. 9, in the gasket 4 according to the second embodiment, the first portion 41 of the gasket 4 contacts the first sealing surface 13, and the second portion 42 of the gasket 4 contacts the second sealing surface 23. The first portion 41 deforms to conform to the shape of the first sealing surface 13, and the second portion 42 deforms to conform to the shape of the second sealing surface 23. Therefore, the sealing properties of the gasket 4 are ensured.

In the second embodiment, the wire diameter D2 of the elastic body 40 in the post-sandwiched state may be larger than the width W1 of each of the first flange 12 and the second flange 22. Further, the wire diameter D2 of the elastic body 40 in the post-sandwiched state may be smaller than the width W1 of the first flange 12 and the second flange 22.

In the second embodiment, the same effects as those of the first embodiment are attained. Further, since the gasket 4 according to the second embodiment includes the core wire 43, the mechanical strength of the gasket 4 is increased. Accordingly, it is possible to ensure the sealing properties of the gasket 4 when pressure from inside to outside of the housing 5 acts on the gasket 4, for example.

### C: Modifications

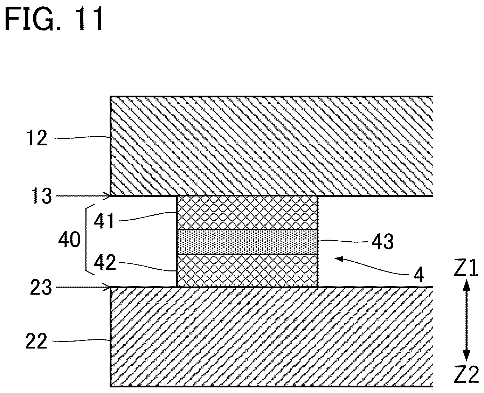

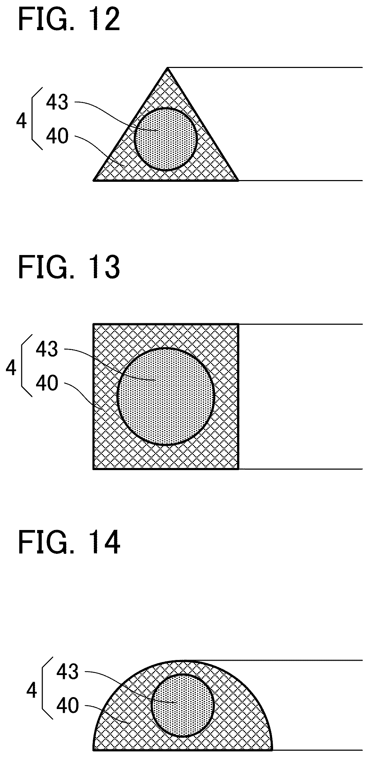

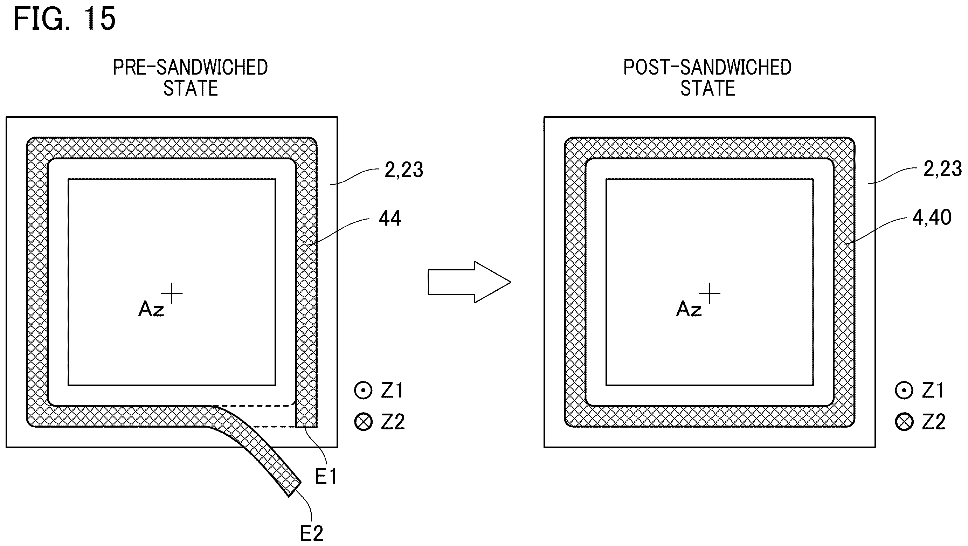

Examples of modifications that can be made to the embodiments described above will now be described. Two or more aspects freely selected from the following examples may be combined as appropriate in so far as they do not contradict each other.
(1) In the second embodiment, a configuration is shown where the core wire 43 is composed of a plurality of strands of resin fibers 430. However, the material of the core wire 43 is not limited to the above example. For example, the core wire 43 may be made of a metal material. However, when the core wire 43 is made of a resin material, adhesion between the elastic body 40 and the core wire 43 is higher than that when the core wire 43 is made of a metal material. Therefore, according to the configuration in which the core wire 43 is made of a resin material, an advantage is obtained in that there is little likelihood of the elastic body 40 and the core wire 43 peeling from each other.
   In the second embodiment, the core wire 43 is composed of a plurality of strands of fibers 430. However, the core wire 43 may be composed of a single wire that has a linear shape. In a case in which the core wire 43 is composed of a plurality of strands of fibers 430, the contact area between the elastic body 40 and the core wire 43 is increased as compared with a case in which the core wire 43 is composed of a single wire. Therefore, according to a case in which the core wire 43 is composed of the plurality of strands of fibers 430, an advantage is obtained in that there is little likelihood of the elastic body 40 and the core wire 43 peeling from each other. The core wire 43 may be composed of a plurality of strands of fibers made of a metal material, or may be composed of a single wire made of a metal material.
(2) In the second embodiment, the core wire 43 is embedded in the elastic body 40. However, when the position of the core wire 43 is between the first portion 41 and the second portion 42, a portion of the core wire 43 may be exposed outside of the elastic body 40. FIG. 11 is a schematic view of the gasket 4 in the post-sandwiched state according to the second modification. As illustrated in FIG. 11, in the gasket 4 according to the second modification, the first portion 41, the core wire 43, and the second portion 42 are stacked in that order in the Z2 direction. The first portion 41 contacts the first sealing surface 13 and the second portion 42 contacts the second sealing surface 23. The position of the core wire 43 is between the first portion 41 and the second portion 42. The inner peripheral surface and the outer peripheral surface of the core wire 43 are exposed outside of the elastic body 40.
(3) In the second embodiment, in cross section, the shape of the elastic body 40 perpendicular to the circumferential direction of the gasket 4 is circular. However, the shape of the gasket 4 can be freely changed. FIG. 12, FIG. 13, and FIG. 14 are each cross-sectional views of the gasket 4 according to the third modification. The shape of the elastic body 40 may be a polygon, such as a triangle, as illustrated in FIG. 12, or a quadrangle as illustrated in FIG. 13. The shape of the elastic body 40 may also be semicircular as illustrated in FIG. 14. The core wire 43 may be omitted from the gasket 4 according to the third modification.
(4) In the second embodiment, in cross section, the shape of the core wire 43 perpendicular to the circumferential direction of the gasket 4 is circular. However, the shape of the core wire 43 may be freely changed. For example, the shape of the core wire 43 may be a polygon, such as a triangle or a quadrangle, or may be substantially semicircular.
(5) In each of the embodiments, the elastic body 40 is formed of urethane. However, in so far as the elastic body 40 is elastically deformable and exhibits tackiness, the material of the elastic body 40 is not limited to urethane. For example, the elastic body 40 may be formed of various rubber materials that are elastically deformable and exhibit tackiness. For example, rubber materials such as a thermosetting elastomer and a thermoplastic elastomer may be used.
(6) A method of manufacture of the gasket 4 may be freely selected. For example, the annular gasket 4 may be integrally formed by a mold in which the internal space is continuous and annular. Further, as illustrated in FIG. 15, the annular gasket 4 may be manufactured by joining one or more members formed in a linear shape (hereinafter referred to as "elongated member 44"). For example, the annular gasket 4 may be formed by joining each end of a single elongated member 44. As described above, since the elastic material used to make the gasket 4 has high tackiness, the end portions of the elongated member 44 can be joined to each other simply by bringing them into contact with each other.

As illustrated in FIG. 15, in plan view, the elongated member 44 is provided to enclose the inner periphery of the second sealing surface 23. Specifically, when the first end E1 of the elongated member 44 is positioned at the corner of the second sealing surface 23, the elongated member 44 is installed as a rectangular frame along the entire inner periphery of the second sealing surface 23, and the second end E2 of the elongated member 44, which opposes the first end E1, is in contact with the first end E1. By bonding the first end E1 and the second end E2 of the elastic body 40 under the tack force of the elastic material of which the elongated member 44 is made, the annular gasket 4 (the elastic body 40) is formed.

The annular gasket 4 may be formed by joining a plurality of elongated members 44 to each other. By bringing the plurality of elongated members 44 into contact with each other, each of the plurality of elongated members 44 can be joined under the tackiness of the elastic material.

(7) In each of the embodiments, a mounting groove for mounting the gasket 4 is not formed on either the first sealing surface 13 or the second sealing surface 23. Alternatively, a mounting groove for mounting the gasket 4 may be formed on the first sealing surface 13 and the second sealing surface 23. However, in the configuration in which the mounting groove for mounting the gasket 4 is not formed on either the first sealing surface 13 or the second sealing surface 23, and in which each of the first sealing surface 13 and the second sealing surface 23 is a flat surface, as described above, there is an advantage that a size of each of the first flange 12 and the second flange 22 can be reduced.

(8) In each of the embodiments, a through-hole into which a fastening member such as a bolt is inserted may be formed through the first flange 12, the second flange 22, and the gasket 4.

(9) The phrase "n" (n is a natural number) in the present application is used only as a formal and convenient label for distinguishing each element in the notation, and has no substantial meaning. Therefore, there is no room for restrictively interpreting the position of each element, the order of manufacture, or the like on the basis of the notation "n".

### D: Appendix

As examples, the following aspects are derivable from the embodiments described above.

A gasket according to an aspect (aspect 1) of the present disclosure is a gasket that is configured to be sandwiched between a first sealing surface of a first member and a second sealing surface of a second member, the second sealing surface facing the first sealing surface. The gasket includes: an annular elastic body in contact with the first sealing surface and the second sealing surface, the annular elastic body enclosing a space between the first member and the second member, and the annular elastic body has a Shore A durometer hardness of 0 or more and 30 or less. According to aspect 1, the elastic body has a Shore A durometer hardness of 0 or more and 30 or less. Thus, the elastic body is sufficiently soft, and a reaction force acting from the elastic body on the first sealing surface and the second sealing surface can be reduced as compared with a configuration in which the elastic body has a Shore A durometer hardness that exceeds 30. As described above, since the elastic body is sufficiently soft, when the elastic body is sandwiched between the first sealing surface and the second sealing surface, a portion of the elastic body in contact with the first sealing surface deforms to conform to the shape of the first sealing surface, and a portion of the elastic body in contact with the second sealing surface deforms to conform to the shape of the second sealing surface. Therefore, the elastic body is in secure contact with the first sealing surface and with the second sealing surface. When the elastic body has a Shore A durometer hardness of 0 or more and 30 or less, the elastic body exhibits tackiness. Therefore, when the elastic body is sandwiched between the first sealing surface and the second sealing surface, the elastic body sticks to the first sealing surface and to the second sealing surface. Therefore, there is little likelihood of a gap occurring between the elastic body and the first sealing surface, and between the elastic body and the second sealing surface. As described above, since the elastic body is in sufficiently secure contact with each of the first sealing surface and the second sealing surface, the space between the first member and the second member can be effectively sealed. That is, according to the present disclosure, it is possible to achieve both suppression of the reaction force acting from the gasket on the first sealing surface and the second sealing surface and improvement of the sealing performance of the gasket. The term "annular" refers to a shape in plan view (i.e., a loop shape) obtained by removing from within a first closed region a second closed region. A "closed region" is, for example, a region enclosed by curved and line segments. That is, "annular" refers to a shape comprised of line segments and curved segments that form a closed loop and enclose a space.

In an example (aspect 2) of aspect 1, the gasket further includes a core wire, in which a stiffness of the core wire is greater than a stiffness of the annular elastic body; the annular elastic body includes: a first portion in contact with the first sealing surface; and a second portion in contact with the second sealing surface; and the core wire is located between the first portion and the second portion. According to the above aspect, the stiffness of the gasket is greater than when the gasket does not include a core wire (that is, when the gasket is constituted of an elastic body). Therefore, even if pressure acts on the gasket from the first sealing surface and the second sealing surface, the gasket is less likely to be deformed.

In an example (aspect 3) of aspect 2, the core wire is embedded in the annular elastic body. According to the above aspect, as compared to when a part of the core wire is exposed outside the elastic body, an area in which the core wire is in contact with the elastic body is large. Therefore, when the gasket is sandwiched between the first sealing surface and the second sealing surface, there is little likelihood of the elastic body and the core wire peeling from each other.

In an example (aspect 4) of aspect 2 or aspect 3, the core wire is made of a resin material. According to the above aspect, as compared to when the core wire is made of a metal material, when the gasket is sandwiched between the first sealing surface and the second sealing surface, there is little likelihood of the elastic body and the core wire peeling from each other.

In an example (aspect 5) of aspect 4, the core wire is composed of a plurality of strands of fibers. According to the above aspect, the elastic body enters into gaps between the fibers in the core wire. Therefore, as compared to when the core wire is made of a single fiber, the area in which the core wire is in contact with the elastic body is large. Therefore, when the elastic body is sandwiched between the first sealing surface and the second sealing surface, there is little likelihood of the elastic body and the core wire peeling from each other.

In an example (aspect 6) of any one of aspects 1 to 5, the annular elastic body has a Shore A durometer hardness of 5 or more and 15 or less. According to the above aspect, the stability of the shape of the gasket is higher than when the elastic body has a Shore A durometer hardness of 0 or more and less than 5. Accordingly, the shape of the gasket remains stable. In addition, compared to a configuration in which the elastic body has a Shore A durometer hardness exceeding 15, the effect of reducing the reaction force from the gasket acting on the first sealing surface and the second sealing surface and improving the sealing property is particularly remarkable.

A sealing structure according to an aspect (aspect 7) of the present disclosure includes a first member including a first sealing surface; a second member including a second sealing surface facing the first sealing surface; and a gasket configured to be sandwiched between the first sealing surface and the second sealing surface. The gasket includes an annular elastic body in contact with the first sealing surface and the second sealing surface, the annular elastic body enclosing a space between the first member and the second member, and the annular elastic body has a Shore A durometer hardness of 0 or more and 30 or less. In this aspect, the elastic body has a Shore A durometer hardness of 0 or more and 30 or less. Consequently, the elastic body is sufficiently soft. Therefore, the reaction force acting from the elastic body on the first sealing surface and the second sealing surface can be reduced as compared to when the elastic body has a Shore A durometer hardness exceeding 30. As described above, since the elastic body is sufficiently soft, when the elastic body is sandwiched between the first sealing surface and the second sealing surface, a portion of the elastic body in contact with the first sealing surface deforms to conform to the shape of the first sealing surface, and a portion of the elastic body in contact with the second sealing surface deforms to conform to the shape of the second sealing surface. Accordingly, the elastic body is in secure contact with the first sealing surface and with the second sealing surface. When the elastic body has a Shore A durometer hardness of 0 or more and 30 or less, the elastic body exhibits tackiness. Therefore, when the elastic body is sandwiched between the first sealing surface and the second sealing surface, the elastic body sticks to the first sealing surface and to the second sealing surface. Therefore, there is little likelihood of a gap occurring between the elastic body and the first sealing surface, and between the elastic body and the second sealing surface. As described above, since the elastic body is in sufficiently secure contact with the first sealing surface and the second sealing surface, the space between the first member and the second member can be effectively sealed. That is, according to the present disclosure, it is possible to achieve both suppression of the reaction force from the gasket acting on the first sealing surface and the second sealing surface and improvement of the sealing performance of the gasket.

In an example (aspect 8) of aspect 7, the first member and the second member constitute a battery case configured to accommodate a battery in the space. In the above aspect, the space in which the battery is accommodated is sealed by the gasket.

In an example (aspect 9) of aspect 7 or aspect 8, each of the first member and the second member is formed of a resin material. Use of a resin material for the first member and the second member is advantageous from a viewpoint of, for example, weight reduction or simplification of manufacture as compared to use of a metal material for the first member and the second member. However, in a configuration in which the first member and the second member are made of a resin material, for example, deformation such as undulation and warping is likely to be generated at the first sealing surface and the second sealing surface, as compared with a configuration in which the first member and the second member are formed of a metal material. Therefore, when the hardness of the gasket is high, a gap is likely to occur between the gasket and a portion where deformation occurs in the first sealing surface or the second sealing surface. Since the gasket of the present disclosure is sufficiently soft, when the elastic body is sandwiched between the first sealing surface and the second sealing surface, a portion of the elastic body in contact with the first sealing surface deforms to conform to the shape of the first sealing surface, and a portion of the elastic body in contact with the second sealing surface deforms to conform to the shape of the second sealing surface. That is, even when each of the first member and the second member is formed of a resin material and deformation occurs in the first sealing surface or the second sealing surface, a likelihood of a gap occurring between the first sealing surface and the gasket, or between the second sealing surface and the gasket can be reduced. As described above, according to the configuration in which each of the first member and the second member is made of a resin material, the weight of the sealing structure can be reduced and manufacture can be simplified, while improving sealing performance.

In an example (aspect 10) of any one of aspects 7 to 9, each of the first sealing surface and the second sealing surface is a flat surface, and a mounting groove for mounting the gasket is not formed in either the first sealing surface or the second sealing surface. In the above aspect, it is not necessary to form the mounting groove in the first sealing surface or the second sealing surface. Therefore, the size of the portion of the first member and the second member to which the gasket is attached can be reduced.

### Description of Reference Signs

1... first member, 2... second member, 3... battery, 4... gasket, 5... housing, 10... lid, 11... first side wall, 12... first flange, 13... first sealing surface, 20... bottom, 21... second side wall, 22... second flange, 23... second sealing surface, 40... elastic body, 41... first portion, 42... second portion, 43... core wire, 44... elongated member, 100... sealing structure, 430... fiber, Az... axial line, D1... wire diameter of the elastic member in pre-sandwiched state, D2... wire diameter of the elastic member in post-sandwiched state, D3... wire diameter of core wire, E1... first end of elongated member, E2... second end of elongated member, S... space between first member and second member, W1... width of each of the first flange and the second flange, W2... width from an outer periphery to an inner periphery of each of the first sealing surface and the second sealing surface

## Claims

1. A gasket configured to be sandwiched between a first sealing surface of a first member and a second sealing surface of a second member, the second sealing surface facing the first sealing surface, the gasket comprising:
an annular elastic body in contact with the first sealing surface and the second sealing surface, the annular elastic body enclosing a space between the first member and the second member,
wherein the annular elastic body has a Shore A durometer hardness of 0 or more and 30 or less.

2. The gasket according to claim 1, further comprising:
a core wire,
wherein:
a stiffness of the core wire is greater than a stiffness of the annular elastic body,
the annular elastic body includes:
a first portion in contact with the first sealing surface; and
a second portion in contact with the second sealing surface, and
the core wire is located between the first portion and the second portion.

3. The gasket according to claim 2, wherein the core wire is embedded in the annular elastic body.

4. The gasket according to claim 2 or claim 3, wherein the core wire is formed of a resin material.

5. The gasket according to claim 4, wherein the core wire is formed of a plurality of strands of fibers.

6. The gasket according to any one of claims 1 to 5, wherein the annular elastic body has a Shore A durometer hardness of 5 or more and 15 or less.

7. A sealing structure comprising:
a first member including a first sealing surface;
a second member including a second sealing surface facing the first sealing surface; and
the gasket according to claim 1.

8. The sealing structure according to claim 7, wherein the first member and the second member constitute a battery case configured to accommodate a battery in the space.

9. The sealing structure according to claim 7 or claim 8, wherein each of the first member and the second member is formed of a resin material.

10. The sealing structure according to any one of claims 7 to 9, wherein each of the first sealing surface and the second sealing surface is a flat surface, and a mounting groove for mounting the gasket is not formed in either the first sealing surface or the second sealing surface.
